# EUROPEAN PATENT APPLICATION

(11) **EP 1 199 111 A1**
(43) Date of publication of application: **24.04.2002**
(21) Application number: 01908333.6
(22) Date of filing: 06.03.2001
(51) Int. Cl.: B06B 1/04

(54) **VIBRATION-GENERATING DEVICE AND PORTABLE TELEPHONE COMPRISING THE SAME**

(30) Priority: 28.03.2000 JP 2000087866; 07.06.2000 JP 2000170216; 21.02.2001 JP 2001044712
(71) Applicant: Iwaki Electronics Co., Ltd., Tokyo 105-0004 (JP)
(72) Inventor: KOBAYASHI, Koichi, IWAKI ELECTRONICS CO., LTD., Minato-ku, Tokyo 105-0004 (JP); SAKATA, Shigemichi, IWAKI ELECTRONICS CO., LTD., Minato-ku, Tokyo 105-0004 (JP); SUZUKI, Minoru, IWAKI ELECTRONICS CO., LTD., Minato-ku, Tokyo 105-0004 (JP)
(74) Representative: Klingseisen, Franz, Dipl.-Ing.
(86) International application number: JP0101711
(87) International publication number: WO0172435

(57) **Abstract**

There is provided a vibration generator that permits to operate by following a mechanical resonance point. The vibration generator 1 has a vibration generation portion 2 having an electromagnetic coil 13 and a magnet 11 float-fixed by a spring member 12. The electromagnetic coil 13 is square-wave driven to obtain vibration force. The vibration generator 1 comprises a driving control portion 10 for detecting a driving voltage of the electromagnetic coil 13 at a predetermined constant interval. By the driving control portion 10, a driving frequency of the electromagnetic coil 13 is made high when an induced voltage waveform of the driving voltage is of rightward increase type, and the driving frequency is made low when the induced voltage waveform is of leftward increase. This permits the driving frequency of the electromagnetic coil to be shifted to a resonance frequency of the vibration generation portion 2. Consequently, driving of the electromagnetic coil 13 can follow a mechanical resonance point so that an sufficiently large vibration can be obtained.

## Description

### Technical Field

The present invention relates to an vibration generator favorably adaptable to portable telephones, pagers, personal handyphone systems, electric game machines, etc. and also provides a portable telephone utilizing the vibration generator.

### Background Art

Most of the conventional and known vibration generators have such a structure that a weight (or balance weight) made of a high specific gravity metal is eccentrically held on an output shaft of a small-sized motor so that a center of gravity of the weight is shifted or displaced along with a rotation of a rotor of the motor to thereby generate vibration. In case that the vibration generators as described are mounted in portable telephones, vibration is generated by the weight instead of generation of a call sound so that user can be notified, by the vibration, of receipt of a call or message, without being known to anybody in conference or in a crowd of people. Further, with respect to game machines utilizing the vibration generators such as car racing game machines or battle games, vibration is given to operation portions to thereby provided the user of the game machines with feelings of virtual reality and so much presence of the games. Thus, if effectiveness of use of the game machines should be exhibited more remarkably, it is necessary to generate vibration of higher amplitude and higher energy and, therefore, it has been sought an outcome of effective vibration generators that provide a higher efficiency.

However, in order to provide high amplitude/high energy vibration, the vibration generator of the structure described above needs a substantial increase of an eccentric weight of the weight and an operational capacity. This inevitably results in larger scale of a driving motor and, in addition to a problem of high price of the weight of high specific gravity metal, has become an obstacle to the market requirements for miniaturization and cost reduction of the device.

Generally, the vibration generators employ, as a driving source, DC motors which are likely to generate an electromagnetic noise from rectifying brushes and the related electric circuits are badly effected by the electromagnetic noise. Thus it has been an eminent problem how to restrict the electromagnetic noise.

Apart from the vibration generators using the motors as described above, the other type of vibration generators which generates less noises by employing a spring member, instead of using a motor, so that a float magnet is vibrated by attachment/detachment operation of an electromagnetic coil. This system is advantageous in respect of cost reduction because of its rather simple structure but, on the other hand, it does not provide a sufficiently large vibration unless the electromagnetic coil is driven at a resonance frequency which is determined by mechanical aspects (such as mass of a spring and weight of a magnet, etc.) of the vibration portions of the device. Thus, at present, since there is no finding of an effective driving method which can always follow the mechanical resonance point, it is likely that the resonance point of the mechanical system is easily scattered due to production dispersion and secular (aged) distortion, etc. Thus, the attempt of using spring member as a vibration generator is not yet put to practical use.

### Disclosure of Invention

As mentioned above, the present invention has been accomplished in view of the shortcomings inherent in the prior art vibration generator. It is, therefore, an object of the present invention to provide a new vibration generator that permits generation of high amplitude and high-energy vibration by forcing a driving frequency of an electromagnetic coil to always follow a mechanical resonance frequency.

Another object of the present invention is to provide a small-sized and low-priced portable phone utilizing the vibration generator.

According to a first aspect of the invention, which is referred to claim 1, there is provided a vibration generator 1 having a movable portion 11 fixed by a spring member 12 in a floatable manner and a vibration generation portion 2 with an electromagnetic coil 13, wherein the vibration generator comprises a driving control portion 10 for detecting a driving voltage (Vd) of the electromagnetic coil 13 at a predetermined constant interval, increasing a driving frequency of the electromagnetic coil 13 when an induced voltage waveform of the driving voltage (Vd) is of a rightward increase type (that is, the driving voltage increases as the time passes), and controlling to decrease the driving frequency of the electromagnetic coil 13 when the induced voltage waveform of the driving voltage (Vd) is of a leftward increase type (that is, the driving voltage decreases as the time passes) so that the driving frequency of the electromagnetic coil 13 is shifted to a resonance frequency of the vibration generation portion 2.

In the structure described above, variation of a superimposed waveform at each driving frequency is detected and correction is made to shift the driving frequency to a resonance frequency, so that fluctuation or scattering in production and discrepancies of resonance points due to deterioration with age can be corrected and, the vibration generation portion can be always vibrated at the resonance point and, therefore, high amplitude and high energy vibration generation can be realized.

According to a second aspect of the invention, which is recited in claim 2, the driving controller portion 10 has a waveform detection circuit 3 for detecting the waveform of the induced voltage whether it is of rightward increase type, leftward increase type or of symmetrical (or quasi-symmetrical) chevron type, an integration circuit for integrating an output of the waveform detection circuit 3 to generate a control voltage (VC2), and a square-wave oscillation circuit for controlling the oscillation frequency by the controlling voltage (VC2).

In the structure described above, variation of the induced voltage waveform corresponding to the driving frequency is converted successively as a variation of DC voltage (controlling voltage VC2) and, therefore, the frequency controlling can be easily achieved by using, for example, a voltage control oscillator (VCO) as the square-wave oscillation circuit. Further, the circuit structure can be made simple.

According to a third aspect of the present invention, which is recited in claim 3, the wave detection circuit 3 serves to provide sampling of front ends of the driving voltage (Vd), comparing a hold voltage thereof with the driving voltage (Vd) to thereby detect whether the induced voltage wave form is of rightward increase type, leftward increase type or symmetrical (or quasi-symmetrical) chevron type.

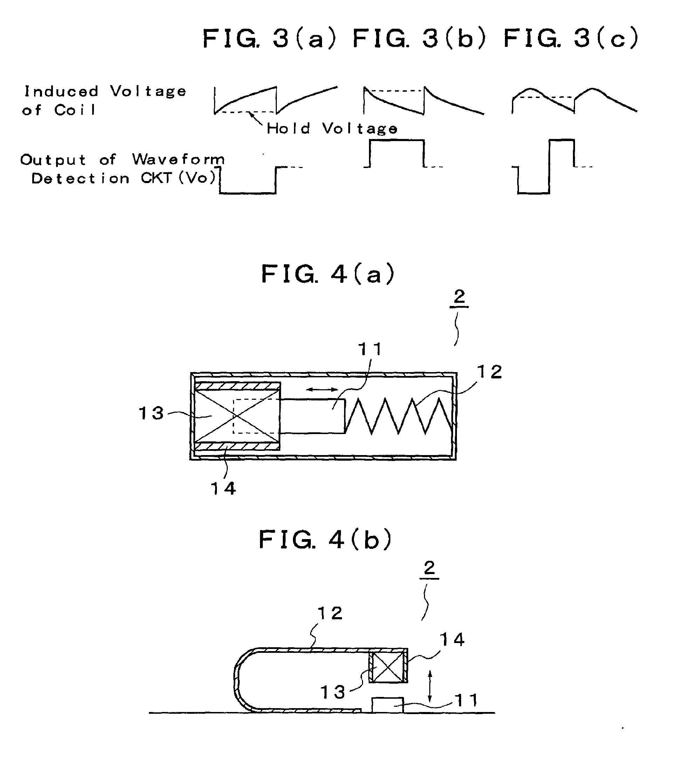

In the structure described above, a hold voltage shown by dotted lines in Figs. 3(a), 3(b) and 3(c), that is, reference voltage for comparison, is obtained and corresponding detected output can be obtained.

According to a fourth aspect of the present invention, which is recited in claim 4, the waveform detection circuit 3 serves to provide sampling of both front and rear ends of the driving voltage (Vd), comparing hold voltages with each other to thereby detect whether the induced voltage wave form is of rightward increase type, leftward increase type or symmetrical (or quasi-symmetrical) chevron type.

In this structure, if the front end of the driving voltage is smaller than the rear end of the same, it is determined that the induced voltage wave shape is of rightward increase type (that is, resonance point is located at a lower position), and if the front end is larger than the rear end, the wave shape is determined to be of leftward increase or rightward decrease (that is, resonance point is located at a higher position). If the front end is equal to the rear end, it can be determined that the induced voltage waveform is of symmetrical chevron type (that is, resonance point). Thus, the waveform detection circuit in the fourth aspect of the invention can be modified such that it can compare the front end of the driving voltage with the rear end of the same.

According to a fifth aspect of the present invention, which is recited in claim 5, detection of the driving voltage (Vd) is conducted at the time of application of both positive/negative voltages in the square-wave driving.

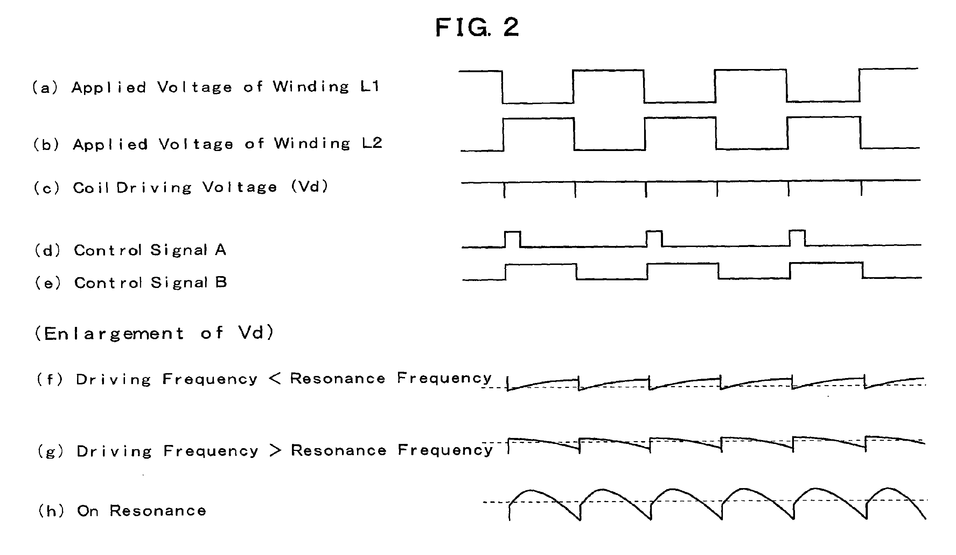

In a case that the electromagnetic coil is driven by a square-wave, a peculiar waveform shown in Fig. 2 is superimposed to the driving voltage of the coil by an induced voltage by vibration of the magnet. In other words, when driving frequency of the coil is higher than a mechanical resonance frequency of the vibration generation portion, the induced voltage waveform to be superimposed is of rightward increase as shown by (f) in Fig. 2, and when driving frequency is lower than the resonance frequency, the voltage waveform is of leftward increase as shown by (g) in Fig. 2. Further, at the time of resonance, a symmetrical (or quasi-symmetrical) chevron as shown by (h) in Fig. 2 is obtained.

According to a sixth aspect of the invention, which is recited in claim 6, detection of the driving voltage (Vd) is conducted at the time of application of negative voltage in the square-wave driving.

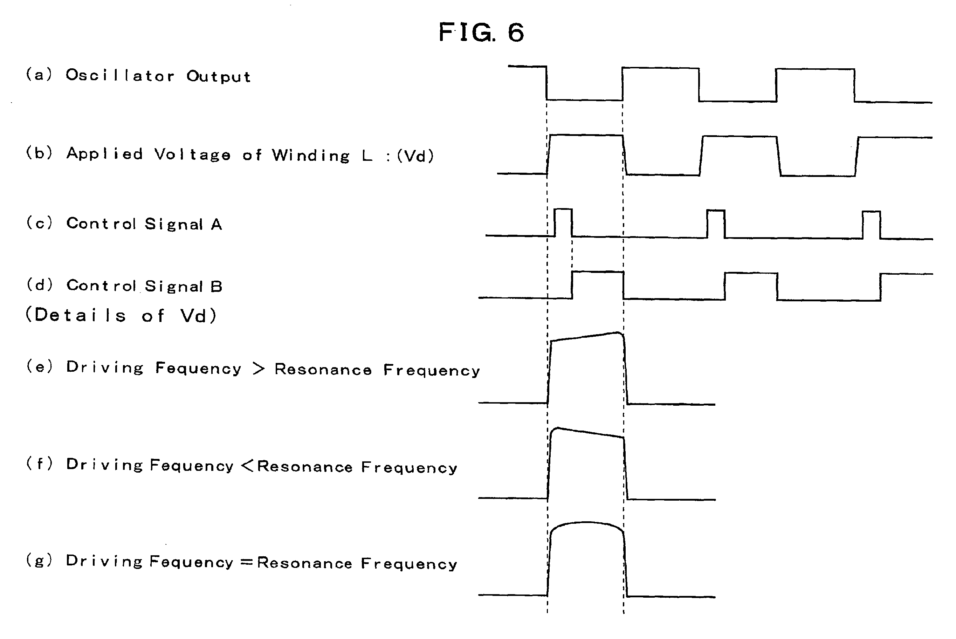

Whereas in the fifth aspect the induced voltage waveform at the time of application of positive and negative voltages, in the sixth aspect of the invention only the induced voltage waveform at the time of negative voltage application is detected to correct the driving frequency (as shown in Fig. 6). In this case, the circuit structure of the driving control portion can be simplified.

According to the first to sixth aspects of the present invention, the vibration (oscillation) generator can be formed small sized and provide high amplitude and high energy vibration and, therefore, the generator is optimal as a vibration source for a portable telephone and the like, so that it can contribute to miniaturization and cost reduction of the entire structure of the portable telephone and the like.

According to a seventh aspect of the present invention, which is recited in claim 7, there is provided a vibration generator 21 with a vibration generation portion 22 having a spring member 32, a permanent magnet 30 and an electromagnetic coil 33, wherein the vibration generator comprises an oscillation circuit 25 for driving the electromagnetic coil 33, a sensor 23 for detecting vibration of the vibration generation portion 22, a delay circuit 24 for delaying an output phase of the sensor by approximately 90 degrees, and a driving control portion 40 for shifting the oscillation frequency of the oscillation circuit 25 to a resonance frequency of the vibration generation portion 22.

By the structure described above, when the electromagnetic coil is driven by a square-wave current, a signal obtained in the sensor drives in the first place at a portion adjacent to the resonance point to thereby generate a small vibration aiming at the fact that the phase has been advanced approximately 90 degrees, and a sensor signal which is obtained at this moment is inputted to the oscillation circuit with a delay of approximately 90 degrees, so that an oscillation frequency is shifted to a resonance frequency. By this structure, discrepancy of resonance point in the mechanical system due to variation in external circumstances, deterioration with age, scattering in production, etc. is automatically corrected so that effective and larger vibration force can be obtained.

According to eighth aspect of the invention, which is recited in claim 8, the vibration generation portion 22 is composed mainly of a U-shaped leaf spring 31 having a fixed end, a permanent magnet 30 and an electromagnet 33.

In the structure of the eighth aspect, the leaf spring is made into a U-shape to thereby lengthen the substantial length of a vibrating portion thereof, so that resonance frequency can be made lower, with the result that shifting control to the resonance point can be made relatively easily by the driving control portion.

According to a ninth aspect of the invention, which is recited in claim 9, the oscillation circuit 25 is composed mainly of a gate circuit (U1), a resistor device (R3) connecting an output and an input of the gate circuit, and a capacitor (C2) connected between the input and the ground.

By the structure described, the circuit structure can be made simpler, and an effective and low-priced vibration generator can be realized.

According to a tenth aspect of the invention, there is provided a new portable vibration generator.

### BRIEF DESCRIPTION OF THE DRWAING

Figure 1 is circuit diagram showing a driving control portion for a vibration generator according to a first embodiment of the invention.

Figure 2 is a diagram showing waveforms of each portion of the driving control portion shown in Figure 1.

Figures 3(a), 3(b) and 3(c) show waveforms of a portion in the driving control portion shown in Figure 1, wherein the portion is different from the portions shown in Figure 2.

Figure 4(a) and 4(b) show examples of vibration generator according to the present invention.

Figure 5 is a circuit diagram of a driving control portion for a vibration generator according to a second embodiment of the invention.

Figure 6 is a diagram showing waveforms of each portion in the driving control portion shown in Figure 5.

Figure 7 is a circuit diagram of a vibration generator according to a third embodiment of the present invention.

Figure 8 is a perspective view of the vibration generator according to the third embodiment of the invention shown in Figure 7.

Figure 9 is a diagram showing waveforms of each portion of the driving control portion in the vibration generator shown in Figure 7.

### BEST MODE FOR CARRYING OUT THE INVENTION

### First Embodiment:

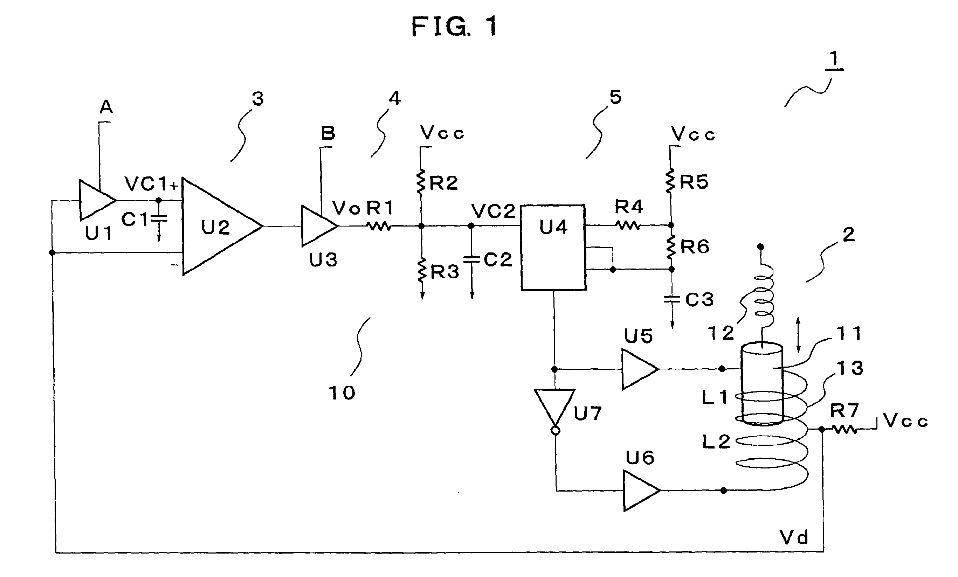

A first embodiment of the invention will be explained with reference to Figures 1 through 4.

As shown in Figure 1, a vibration generator 1 has a vibration generation portion 2 having a moveable portion (a permanent magnet 11) and an electromagnetic coil 13, and a driving control portion 10 which drives the electromagnetic coil 13 by a square-wave at a mechanical resonance frequency.

A detailed description of the driving control portion 10 will be made hereinafter with reference to Figure 1.

In Figure 1, a waveform detection circuit 3 detects variation (that is, rightward increase, leftward increase or symmetrical chevron) of a superimposed waveform (induced voltage waveform) of the coil driving voltage. The waveform detection circuit 3 has a sampling circuit composed of a gate circuit U1 (analog switch, for example) which is switched on and off by a control signal A and a charging capacitor C1 connected with an output of the gate circuit U1. The waveform detection circuit 3 has a comparator U2, a gate circuit U3 which is switched on and off by a control signal B. The waveform detection circuit 3 is connected, at its minus (-) input terminal side, to a middle portion of two windings L1, L2 of the electromagnetic coil 13, and the middle portion of the coil 13 is connected with a driving power source Vcc through a resistor R7.

An integrating circuit (smoothing circuit) 4, which is composed mainly of a resistor R1 and a capacitor C2, serves to smooth an output Vo of the waveform detection circuit 3 to generate control voltage VC2. Resistors R2 and R3 are bias circuits which provide a predetermined potential when the gate circuit U3 is off, and values of resistance in each of the resistors are set so that a middle potential of the power source Vcc can be obtained.

A square-wave oscillation circuit 5 has a voltage control oscillator (VCO) designated at U4 which uses the integrating output as an oscillating control voltage, and exterior type parts and elements such as resistors R4 to R6, capacitor C3. The voltage control oscillator U4 can vary optionally the oscillating frequency within a predetermined range by the control voltage VC and, incidentally, when the control voltage VC2 becomes lower, an oscillating frequency becomes higher. On the other hand, when the control voltage VC2 becomes higher, the oscillating frequency becomes lower. An output side of the voltage control oscillator U4 is connected with the windings L1 and L2 through drivers U5, U6, etc.

An operational mode of the driving control portion 10 will be described with reference to Figure 2 and Figures 3(a), 3(b) and 3(c).

The square-wave oscillated by the voltage control oscillator U4 shown in Figure 1 drives each of the windings L1 and L2 at the timing shown by (a) and (b) of Figure 2 through drivers U5 and U6. In this case, the winding L1 and the winding L2 are alternately supplied with an electric power at a predetermined timing (that is, at the positive/negative voltage application in the square-wave driving). For example, when the winding L1 is supplied with an electric current, the magnet 11 is attracted with the electromagnetic coil and, when the winding L2 is supplied with an electric current, the magnet 11 is bounced off from the electromagnetic coil. By repetitive operations of the windings L1 and L2, the magnet 11 is vibrated at a predetermined driving frequency.

At this moment, a peculiar waveform which is correspondent to the driving frequency as shown at (f) through (h) in Figure 2 is superimposed to the driving voltage Vd of the electromagnetic coil 13 by the induced voltage due to vibration of the magnet. Incidentally, waveforms (f) to (h) in Figure 2 show partly the superimposed waveform of the driving voltage Vd. In other words, when a driving frequency of the electromagnetic coil 13 is higher than a resonance frequency of the vibration generation portion 2, the superimposed waveform is configured to be of rightward increase type as illustrated by the waveform (f) of Figure 2 and, on the other hand, when it is lower than a resonance frequency, it is configured to be of leftward increase type as shown by the waveform (h) of Figure 2. Further, at the time of resonance, waves of substantially symmetrical (or quasi-symmetrical) chevron type appear as shown by the waveform (h) of Figure 2.

In the waveform detection circuit 3, the driving voltage Vd is subject to sampling for a predetermined duration at a timing of control signal A through the gate circuit U1, and electric voltage of its front end portion is charged (or held) in the capacitor C1. The hold voltage of this time becomes a reference voltage of a comparator U2. The comparator U2 compares the hold voltage VC1 with the driving voltage Vd of the electromagnetic coil 13, wherein the driving voltage Vd was inputted to the minus (-) terminal. If the driving voltage Vd is higher than the reference voltage VC1 shown by dotted lines in waveforms (f) to (h) in Figure 2, an L (low) voltage is outputted and, on the other hand, if driving voltage is lower then the reference voltage, an H (high) voltage is outputted. The gate circuit U3 is connected with a control signal B, and the gate thereof is opened only when the winding L1 is being driven.

Now, if the driving frequency is higher than the resonance frequency, an output of the comparator U2 is almost an L (low) output and, therefore, the control voltage VC2 becomes low and an oscillating frequency of the voltage control oscillator U4 is shifted to a higher region, as shown in Figure 3(a). If the driving frequency is lower than the resonance frequency, an output of the comparator U2 is almost an H (high) output and, therefore, the control voltage VC2 becomes high and an oscillating frequency of the voltage control oscillator U4 is shifted to a lower region, as shown in Figure 3(b). Further, if the oscillating frequency comes to a portion which is closely adjacent to a resonance frequency, an output of the comparator U2 is placed into a state that each of the H output and the L output occupies a half as shown in Figure 3(c), and the control voltage VC2 maintains the electric potential of that time, so that its oscillating frequency at that time is maintained.

The control voltage VC2 is biased by resistors R2 and R3 to a middle potential of the power source Vcc while the gate circuit U3 is OFF, that is, during the time when the winding L2 is being driven, and an oscillating frequency of the voltage control oscillator U4 is always set to a position adjacent to the resonance frequency, so that a responding speed for frequency correction can be expedited.

As a means for detection of the waveform, instead of the circuit structure described above, many other method and devices can be used. For example, though not illustrated, both front end and rear end of the driving voltage Vd are subjected to sampling for a predetermined time to compare each of the hold voltages and detect its waveform of the induced voltage whether it is of rightward increase type, leftward increase type, or symmetrical (or quasi-symmetrical) type. In this case, if each of the hold voltages at the front end of the driving voltage is smaller than that of the rear end, the waveform is determined to be of rightward increase type (that is, a resonance point is located at a lower portion), and if the hold voltages at the front end is larger than those of the rear end, it is determined that the waveform is of rightward increase type (that is, the resonance point is located at higher portion), and if the hold voltages of the front end are equal to those of the rear end, it is determined that the waveform is of symmetrical chevron type (that is, resonance point).

### Second Embodiment:

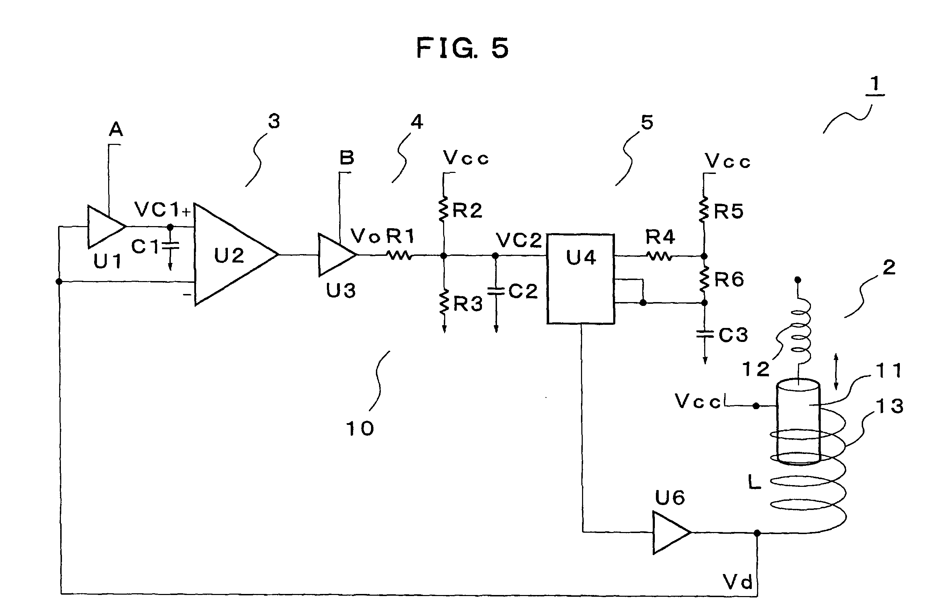

A second embodiment of the present invention relating to the driving control portion 10 will be described with reference to Figures 5 and 6.

In the first embodiment mentioned above, a detection timing of the superimposed waveform at the time of the coil driving is determined to be made at the time of positive/negative voltage application. In the second embodiment, however, the detection timing of the superimposed waveform is made only at the negative voltage application (that is, at the time when the coil driving is OFF).

The circuit structure of the driving control portion 10 in the second embodiment is similar to that of the Figure 1, except that an electromagnetic coil 13 of the driving control portion 10 is composed of a single winding L which has an end connected with the driving power source Vcc and the other end connected with the output of a driver U6 and the minus (-) input terminal of the waveform detection circuit 3.

In the structure described above, a square-wave oscillated at the voltage control oscillator U4 serves to drive the winding L at the timing of (a) and (b) of Figure 6. At this moment, waveforms as shown by (e) to (f) of Figure 6 are superimposed to the driving voltage Vd of the electromagnetic coil 13 at the timing of the coil driving being OFF. The superimposed waveform is, as similar as the first embodiment, of rightward increase type if the driving frequency of the electromagnetic coil 13 is higher than the resonance frequency of the vibration generation portion 2 as illustrated by (e) of Figure 6. Similarly, if the driving frequency of the electromagnetic coil 13 is lower than the resonance frequency, the superimposed waveform becomes of leftward increase type as illustrated by (f) of Figure 6. At the time of resonance, a symmetrical or quasi-symmetrical chevron type waveform appears as shown by (g) of Figure 6. Processing thereafter is substantially same as that of the first embodiment of the invention described previously and no further detailed description will be made.

The circuit structure in the second embodiment will be made more simplified manner with less number of parts and elements than the first embodiment and it is more effective to miniaturization purposes.

According to the present invention, an attention is paid to a change or variation of an induced voltage of the electromagnetic coil at each driving frequency so that when the induced voltage waveform under the control of the driving control portion 10 is of rightward increase type, the driving frequency is made higher, and similarly, when the induced voltage waveform is of leftward increase type, the driving frequency is made lower, so that the driving frequency can be shifted successively to a mechanical resonance frequency of the vibration generation portion 2. Thus, mechanical variation due to mechanical dispersion and irregularity (such as dispersion of mass of the spring and weight of the magnet) and deterioration with age can be corrected so that driving of the electromagnetic coil can always follow the resonance point and, accordingly, the vibration generation portion 2 can provide effectively a vibration force of high amplitude and high energy.

Figures 4(a) and 4(b) show preferred examples of the vibration generation portion 2 according to the present invention.

In Figure 4(a), the vibration generation portion 2 has an electromagnetic coil 13 fitted in a tubular yoke 14, a permanent magnet 11 movably inserted into the coil winding, and a coil spring 12 fitted to an end of the permanent magnet 11 so that the magnet is biased toward the electromagnetic coil 13. In Figure 4(b), the vibration generation portion 2 has a U-shaped leaf spring 12, an electromagnetic coil 13 fitted in a yoke 14 and fixed to a tip portion of the U-shaped leaf spring, with the electromagnetic coil projecting downwardly, and a permanent magnet 11 fixed to the lower portion of the electromagnetic coil 13 as illustrated. The structures shown in Figures 4(a) and 4(b) can be applied to the driving control portion 10 of the present invention.

As described, the vibration generator 1 of the present invention can be made smaller than the conventional structure utilizing a motor and a weight and, moreover, a vibration of high amplitude and high energy can be obtained efficiently and, therefore, it is optimally suitable for vibration source for portable telephones. Further, it can contribute to the miniaturization and cost reduction of the portable telephones.

### Third Embodiment:

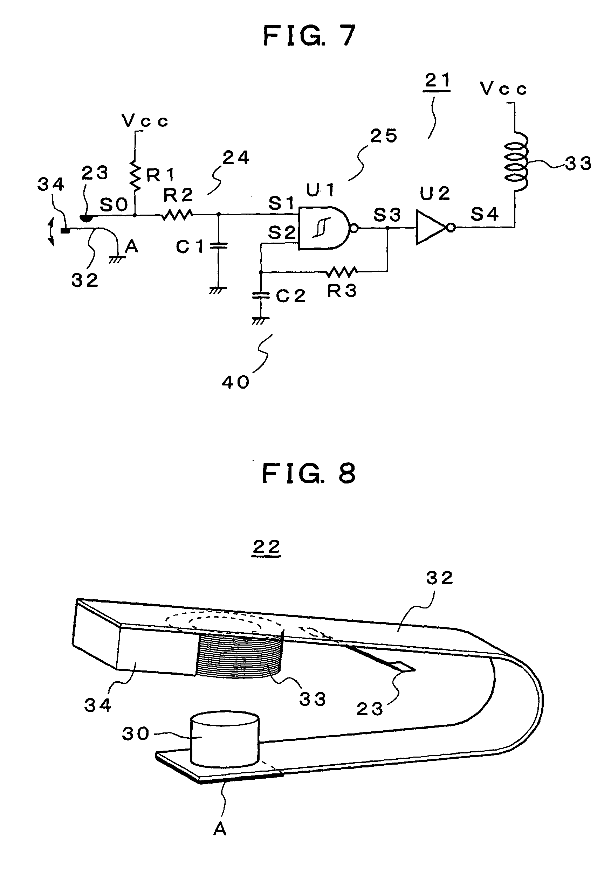

A third embodiment of the present invention will be described with reference to Figures 7, 8 and 9.

A vibration generator 21 of the third embodiment has, as a spring member, a U-shaped leaf spring which is formed by bending a resilient longitudinal plate, a permanent magnet 30 fitted to a lower portion of the U-shaped leaf spring 32, and an exciting coil 33 which is "float-fitted" (or fitted in a floatable manner) to the other end portion of the leaf spring 32 in a spaced confronting relation with respect to the permanent magnet 30, so that the exciting coil 33 on the other end portion of the U-shaped leaf spring 32 can be moved resiliently relative to the other end portion of the leaf spring 32 by the effect of resiliency of the leaf spring itself. A lower portion A of the permanent magnet 30 is fixed to a vibrated body which receives vibration. In the present invention, the positional relation between the permanent magnet 30 which is positioned at a lower portion of Figure 8 and the exciting coil 33 at the upper portion of Figure 8 can be changed upside down by positioning the permanent magnet 30 at the upper portion and the exciting coil 33 at the lower position so that the permanent magnet 30 is float-fitted to the upper end portion of the U-shaped leaf spring 32.

In the third embodiment of the invention, a weight or pendulum 34 is fitted to an end portion of the leaf spring 32 at the portion adjacent to the exciting coil 33 so that the weight or pendulum 34 serves to effectively convert an exciting current to a vibration energy. Further, a sensor 23 is disposed near the vibration portion inside the U-shaped leaf spring 32 so that vibration is detected. The sensor 23 serves to detect such a small vibration (approximately 1.0 mm of amplitude, for example) and, therefore, a simple structure can be used by employing a member of an electrically conductive material as a detecting contact, without using switches which are available in market.

The driving control portion 40 and its operational mode will be described with reference to Figures 7, 8 and 9.

An output of the square-wave oscillation circuit 25 is connected with the exciting coil 33 of the oscillation generation portion through the driver U2. The oscillation circuit 25 has a two-input NAND gate circuit U1 of a Schmitt trigger type, a resistor R3 connected with the NAND gate circuit U1, an integrating loop circuit having a capacitor C2. With respect to the oscillation circuit 25, time constant is set so that the oscillation circuit 25 is self-oscillated at the frequency adjacent to a resonance frequency which is determined by the mechanical factors of the oscillation generation portion 22 (such as a total weight of the permanent magnet 30, weight 34 and the electromagnetic coil 33 and an elasticity strength or a resilient force of the leaf spring 32) at the time when an electric power is provided.

The vibration detection sensor 23 has a contact portion which is disposed on a substrate and pulled up (connected) to the power source Vcc by the resistor R1. A fixed side A of the leaf spring 32, which is located adjacent to the sensor 23 is pulled down (connected) to the ground.

An integrating delay circuit24 which is composed of a resistor R2 and a capacitor C1 is constructed such that a time constant is set so that a phase of a contact signal S0 is delayed by approximately 90 degrees.

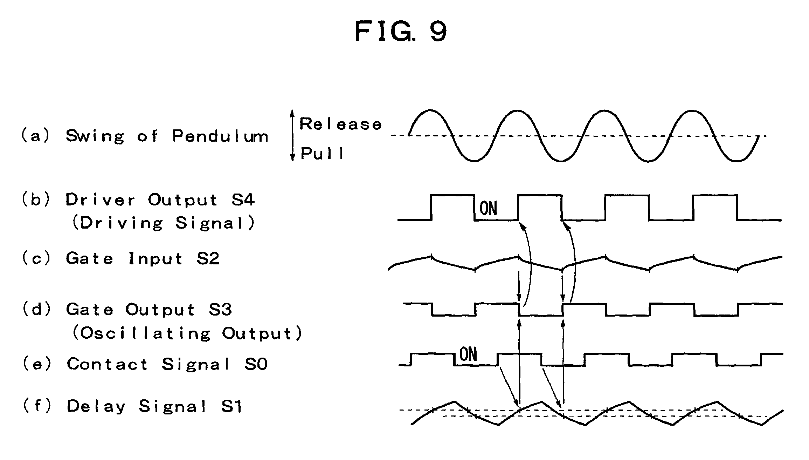

In the structure described above, when an electric power is provided to the driving control portion 40, the oscillation circuit 25 is self-oscillated through the timing of (c) and (d) of Figure 9, and its oscillating output S3 drives the exciting coil 33 through the driver U2 to thereby vibrating the weight or pendulum 34. Vibration of the weight or pendulum 34 is shown by (a) of Figure 9.

When the pendulum 34 is vibrated, the contact of the sensor 23 which has been opened is, in synchronism with the vibration, driven ON/OFF repeatedly. In case of the circuit structure, the contact signal S0 is in OFF state (open contact state) at the time of non-operation or when the electromagnetic coil 33 and the permanent magnet 30 are repulsed or under repulsion with each other, and it is in ON state (short contact state) when the both elements 33 and 30 are attracted to each other. Incidentally, Figure 9 shows waveforms of each portion when the driving control operation is conducted at the resonance frequency. As illustrated in Figure 9, there is a phase difference of approximately 90 degrees between the driving signal S4 and the contact signal S0, but at the initial moment of power supply, and in the state where the driving frequency is not yet sufficiently shifted to the resonance frequency, there is a gap or offset (not shown) in a phase relation between the contact signal S0 and the driving signal S4 and, moreover, the vibration of the leaf spring 23 is extremely small.

An operational control will be explained when an oscillation frequency by the oscillation circuit 25 is higher than a resonance frequency. The contact signal S0 is delayed relative to the timing shown in Figure 9 and its delay signal S1 is inputted into the gate U1 belatedly (with some delay) relative to the gate input S2. Consequently, the gate input S2 becomes a signal of a waveform which is delayed at a front (earliest) end of the ON period and, as a result, the driving current of the exciting coil 33 is delayed as mush as the delay of the front end of the ON period, so that the oscillation frequency is lowered. Thus, the oscillation frequency is moved more closely to the resonance frequency and finally shifted to the portion which is very close to the resonance frequency.

If, on the other hand, the oscillation frequency is lower than the resonance frequency, the contact signal S0 is earlier than the timing shown in Figure 9, and its delay signal S1 is inputted to the gate U1 earlier than the gate input S2. Consequently, gate output S3 becomes a signal of a waveform such that a rear end of the pulse signal is moved forward or advance. As a result, a driving current of the exciting coil 33 exceeds or go ahead of the aforementioned case in which the oscillation frequency is higher than the resonance frequency, with the result that the oscillation frequency becomes high. Thus, the oscillation frequency comes closer to the resonance frequency and is shifted to an oscillation frequency that is extremely close to the resonance frequency.

By the operation of the driving control portion 40 as described above, in the vibration generator 21 of this embodiment, a gap or offset of the resonance point in the mechanical system, which is caused by production dispersion, deterioration with age or external and environmental changes, can be automatically corrected or adjusted so that the device is driven adjacent the resonance point and consequently a large vibration can be obtained efficiently. Further, the driving control portion 40 does not employ a complex feedback control mechanism which is generally used in correction control system or mechanism and, therefore, the circuit structure is of extreme simplicity, and this permits realization of less expensive vibration generator of high vibration.

According to the present invention, driving voltage of the electromagnetic coil is detected at a predetermined interval and if the waveform of the induced voltage at that time is of rightward increase type, a driving frequency of the electromagnetic coil is made higher, and if the waveform of the induced voltage is of leftward increase type, a driving frequency of the electromagnetic coil is made lower. This control permits the driving frequency of the electromagnetic coil to be shifted to he mechanical resonance frequency of the vibration generation portion, and mechanical variation due to dispersion and irregularity of the mechanical system and deterioration with age can be corrected so that driving of the electromagnetic coil can always follow the resonance point and, accordingly, the vibration generation portion 2 can provide effectively vibration force of a high amplitude and high energy.

The vibration generator 1 of the present invention can be used for a portable telephone to contribute to miniaturization and cost reduction of the portable telephone.

Further, as recited in claim 7, the present invention provides a vibration generator which comprises an oscillation circuit for driving the electromagnetic coil, a sensor for detecting vibration of the vibration generation portion, a delay circuit for delaying an output phase of the sensor by approximately 90 degrees, and a driving control portion for shifting the oscillation frequency of the oscillation circuit to a resonance frequency of the vibration generation portion. By this structure, discrepancy of resonance point in the mechanical system due to variation in external circumstances, deterioration with age, scattering in production, etc. is automatically corrected so that effective and larger vibration force can be obtained.

In the vibration generator of the present invention, as recited in claim 8, the vibration generation portion 22 is composed mainly of a U-shaped leaf spring 31 having a fixed end, a permanent magnet 30 and an electromagnet 33. The leaf spring is made into a U-shape to thereby lengthen the substantial length of a vibrating portion thereof, so that resonance frequency can be made lower, with the result that shifting control to the resonance point can be made relatively easily by the driving control portion.

According to the present invention, as recited in claim 9, the oscillation circuit is composed mainly of a gate circuit, a resistor device connecting an output and an input of the gate circuit, and a capacitor connected between the input and the ground. Thus, the circuit structure can be made simpler, and since the control can be made to follow resonance point, an effective and low-priced vibration generator can be realized.

Although the present invention has been described with reference to the preferred embodiments only and it should be understood that many modifications and alterations can be made within the scope of the invention recited in the appended claims.

## Claims

1. A vibration generator 1 having a movable portion 11 fixed by a spring member 12 in a floatable manner and a vibration generation portion 2 with an electromagnetic coil 13, wherein the vibration generator comprises a driving control portion 10 for detecting a driving voltage (Vd) of the electromagnetic coil 13 at a predetermined constant interval, increasing a driving frequency of the electromagnetic coil 13 when an induced voltage waveform of the driving voltage (Vd) is of a rightward increase type (that is, the driving voltage increases as the time passes), and controlling to decrease the driving frequency of the electromagnetic coil 13 when the induced voltage waveform of the driving voltage (Vd) is of a leftward increase type (that is, the driving voltage decreases as the time passes) so that the driving frequency of the electromagnetic coil 13 is shifted to a resonance frequency of the vibration generation portion 2.

2. A vibration generator according to claims 1, wherein the driving controller portion 10 has a waveform detection circuit 3 for detecting the waveform of the induced voltage whether it is of rightward increase type, leftward increase type or of symmetrical chevron type, an integration circuit for integrating an output of the waveform detection circuit 3 to generate a control voltage (VC2), and a square-wave oscillation circuit 5 for controlling the oscillation frequency by the controlling voltage (VC2).

3. A vibration generator according to claim 2, wherein the wave detection circuit 3 serves to provide sampling of front ends of the driving voltage (Vd), comparing a hold voltage thereof with the driving voltage (Vd) to thereby detect whether the induced voltage wave form is of rightward increase type, leftward increase type or symmetrical chevron type.

4. A vibration generator according to claim 2, wherein the waveform detection circuit 3 serves to provide sampling of both front and rear ends of the driving voltage (Vd), comparing hold voltages with each other to thereby detect whether the induced voltage wave form is of rightward increase type, leftward increase type or symmetrical (or quasi-symmetrical) chevron type.

5. A vibration generator according to any one of claims 1 to 4, wherein the detection of the driving voltage (Vd) is conducted at the time of application of both positive/negative voltages in the square-wave driving.

6. A vibration generator according to any one of claims 1 to 4, wherein detection of the driving voltage (Vd) is conducted at the time of application of negative voltage in the square-wave driving.

7. A vibration generator with a vibration generation portion 22 having a spring member 32, a permanent magnet 30 and an electromagnetic coil 33, wherein the vibration generator comprises an oscillation circuit 25 for driving the electromagnetic coil 33, a sensor 23 for detecting vibration of the vibration generation portion 22, a delay circuit 24 for delaying an output phase of the sensor by approximately 90 degrees, and a driving control portion 40 for shifting the oscillation frequency of the oscillation circuit 25 to a resonance frequency of the vibration generation portion 22.

8. A vibration generator according to claim 7, the vibration generation portion 22 is composed mainly of a U-shaped leaf spring 31 having a fixed end, a permanent magnet 30 and an electromagnet 33.

9. A vibration generator according to claim 7 or 8, wherein the oscillation circuit 25 is composed mainly of a gate circuit (U1), a resistor device (R3) connecting an output and an input of the gate circuit, and a capacitor (C2) connected between the input and the ground.

10. A vibration generator according to claim 1 or 7, the vibration generator is used for and mounted in a portable telephone.
